# EUROPEAN PATENT APPLICATION

(11) **EP 2 747 035 A1**
(43) Date of publication of application: **25.06.2014**
(21) Application number: 12199033.7
(22) Date of filing: 21.12.2012
(51) Int. Cl.: G07B 15/02, H04W 36/08, H04W 36/24, H04W 84/00

(54) **Method and device for determining usage of a transportation facility by a user**

(71) Applicant: Telefonaktiebolaget L M Ericsson AB (Publ), 164 83 Stockholm (SE)
(72) Inventor: Hadzic, Hrvoje, 10020 Zagreb (HR); Falconetti, Laetitia, 52070 Aachen (DE); Lupic, Ivan, 52134 Herzogenrath (DE)
(74) Representative: Medau, Jörn

(57) **Abstract**

Various aspects relate to a method and device for determining usage of a transportation facility by a user carrying a user equipment, the transportation facility comprising a vehicle having a vehicle base station associated with the vehicle, the vehicle base station providing a vehicle cell in the vehicle. The method comprises detecting a first handover of the user equipment from a first cell provided by a first base station to the vehicle cell and obtaining first event data associated to the vehicle at the first handover. A second handover of the user equipment from the vehicle cell to a second cell provided by a second base station is detected and second event data associated to the vehicle at the second handover is obtained. The method further comprises determining that the user has used the transportation facility if the first event data and the second event data meet at least one pre-determined criterion.

## Description

### TECHNICAL FIELD

The various aspects relate to determining of use of a transportation facility by a user and in particular to detecting presence of a person in a vehicle.

### BACKGROUND

Ticketing for public transport, either by means of paper tickets or by means of RFID/NFC, requires close interaction between a validation device and the user. This may cause congestion, either in a vehicle or on a platform. This is because usually only a limited amount of validation devices is available and because the user usually needs to stop for effectuating the validation.

### SUMMARY

It is preferred to dispose of a more user friendly way of determining use of a public transportation service by a user.

A first aspect provides a method of determining usage of a transportation facility by a user carrying a user equipment, the transportation facility comprising a vehicle having a vehicle base station associated with the vehicle, the vehicle base station providing a vehicle cell of a cellular network in the vehicle. The method comprises detecting a first handover of the user equipment from a first stationary cell provided by a first stationary base station to the vehicle cell and obtaining first event data associated to the vehicle at the first handover. A second handover of the user equipment from the vehicle cell to a second stationary cell provided by a second stationary base station is detected and second event data associated to the vehicle at the second handover is obtained. The method further comprises determining that the user has used the transportation facility if the first event data and the second event data meet at least one pre-determined criterion. The vehicle base station can be a mobile relay node according to 3GPP standard.

By detecting handover of the user equipment to the vehicle base station, presence of the user in the vehicle may be detected. By detecting handover of the user equipment from the vehicle base station, the user leaving the vehicle may be detected. By checking the event data and matching it to the pre-determined criterion, further certainty may be acquired on the user having used the transportation facility and in particular having been present in the vehicle.

An embodiment of the first aspect further comprises receiving, from the user equipment, a user equipment identifier, the user equipment identifier identifying the user equipment; checking the user equipment identifier against a list of subscribed identifiers, the subscribed identifiers identifying user equipments subscribed to a public transport service provided by the transportation facility; and if the user equipment identifier is in the list of subscribed identifiers, enabling handover from the first stationary cell to the vehicle cell.

In this way, only presence of users registered to the transportation service is detected, reducing an amount of accidental detections.

Another embodiment of the first aspect comprises measuring a first stationary signal strength of a first stationary signal provided by the first stationary base station at a periphery of the vehicle; and adjusting a vehicle signal strength of a vehicle signal provided by the vehicle base station such that, within the periphery of the vehicle, the vehicle signal strength is higher than the first stationary signal strength.

This embodiment reduces accidental handover of user equipments located in the vehicle from the vehicle cell to cells outside the vehicle. In this way, the user equipment remains associated with the vehicle while the user carrying the user equipment is present in the vehicle.

In yet another embodiment of the first aspect, the first event data is a first location; the second event data is a second location; and the pre-determined criterion is that the difference between the first location and the second location is larger than a pre-determined location value.

With embodiment, accidental detection of usage by accidental handovers from user equipment not in the vehicle but close to the vehicle at a very short distance, for example in front of a traffic light, is reduced.

In yet a further embodiment of the first aspect, the first event data is a first local time; the second event data is a second local time; and the pre-determined criterion is that the difference between the first local time and the second local time is larger than a pre-determined time value.

With embodiment, accidental detection of usage by accidental handovers from user equipment not in the vehicle but close to the vehicle for a limited amount of time, for example in front of a traffic light, is reduced.

Again another embodiment of the first aspect comprises receiving a message from the user equipment, the message comprising data indicating an intention of the user to use a service provided by the vehicle, wherein determining that the user has used the transportation facility comprises checking whether the message comprising data indicating the intention has been used.

This embodiment allows users to specifically register to a transportation service, ensuring that if use is detected and checked against the intention, the use was intentional and thus, the detection was correct.

A second aspect provides a device for detecting usage of a transportation facility by a user carrying a user equipment, the transportation facility comprising a vehicle having a vehicle base station associated with the vehicle, the vehicle base station providing a vehicle cell of a cellular network in the vehicle. The device comprises a processing unit arranged to detect a first handover of the user equipment from a first stationary cell provided by a first stationary base station to the vehicle cell and detect a second handover of the user equipment from the vehicle cell to a second stationary cell provided by a second stationary base station. The device further comprises a data communication module arranged to obtain a first event data associated to the vehicle at the first handover and obtain a second event data associated to the vehicle at the second handover. The processing unit is further arranged to determine that the user has used the transportation facility if the first event data and the second event data meet at least one pre-determined criterion.

A third aspect provides Computer programme product with computer executable code causing computer having read the code to perform method according to the first aspect.

### BRIEF DESCRIPTION OF THE DRAWINGS

The various aspects and embodiments thereof will now be discussed in further detail in conjunctions with Figures. In the Figures:
- Figure 1:: shows a bus;
- Figure 2:: shows a bus driving from a first bus stop to a second bus stop;
- Figure 3:: shows a public transport access server;
- Figure 4:: shows a first flowchart; and
- Figure 5:: shows a second flowchart.

### DETAILED DESCRIPTION

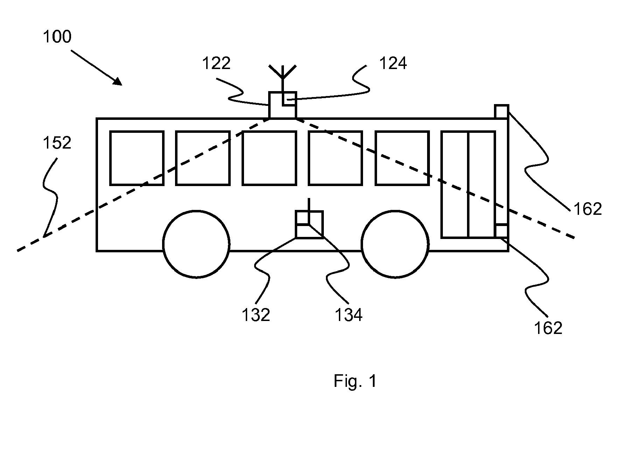

Figure 1 shows a bus 100 as a vehicle comprised by a transportation facility. The vehicle can also be a train, an airplane or a car. The bus 100 provides a public transportation service by transferring people from a first location to a second location. The bus 100 is provided with a mobile base station 122 providing a bus cell 152 as part of a cellular network. The mobile base station 122 comprises a bus GPS module 124 for obtaining a geographical location of the mobile base station 122 and with that, of the bus 100. Alternatively, the bus GPS module 124 may be located in the bus as part of a navigation system of the bus 100. In the bus 100, a mobile telephone 132 is provided as a user equipment. The mobile telephone 132 comprises a telephone GPS module 134 for obtaining a geographical location of the mobile telephone 132. The bus 100 further comprises a signal strength detector 162 for measuring a strength of a signal provided by a stationary base station for providing a stationary cell.

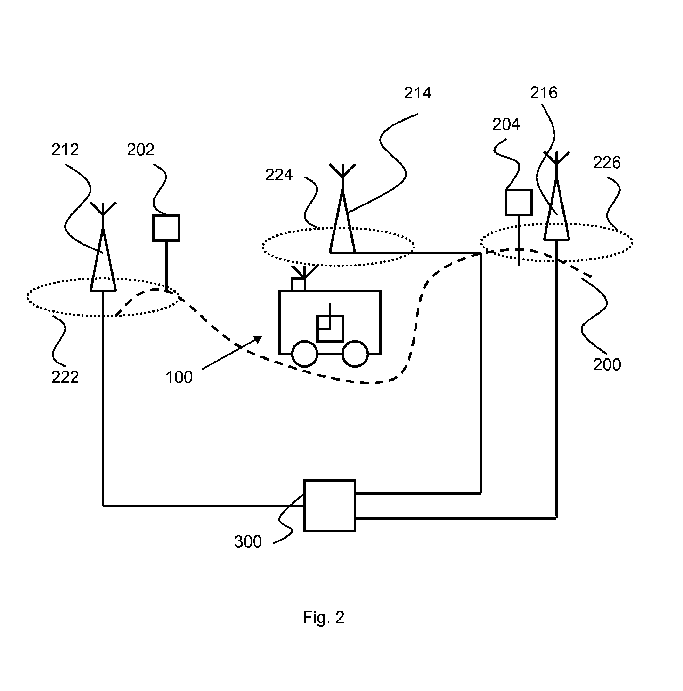

Figure 2 shows the bus 100, driving on a bus line trajectory 200 defined between a first bus stop 202 and a second bus stop 204. In the vicinity of the first bus stop 202, a first base station 212 is provided for serving a first stationary cell 222. In the vicinity of the second bus stop 204, a second base station 216 is provided for serving a second stationary cell 226. The first bus stop 202 is located in the first cell 222 and the second bus stop 204 is located in the second cell 226. A third base station 214 is provided along the bus line trajectory 200 for serving a third stationary cell 224. The bus line trajectory 200 is partly located in the third cell 224. The first base station 212, the second base station 216 and the third base station 214 are connected to a public transport access server 300. The public transport access server 300 may form part of a base station controller or another part of a cellular network. Alternatively, the public transport access server 300 is an independent dedicated device connected to a cellular network comprising the first stationary cell 222, the second stationary cell 226, the third stationary cell 224 and the mobile cell 152.

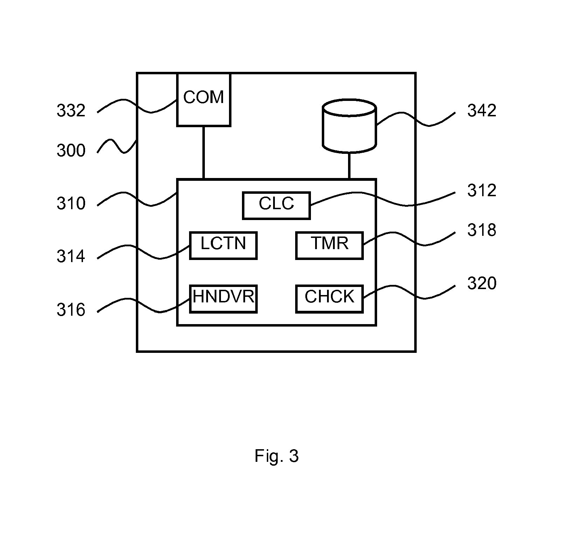

Figure 3 shows the public transport access server 300 in further detail. The public transport access server 300 comprises a processing module 310, a storage module 342 and a communication module 332 for connecting the public transport access server 300 to the first base station 212, the second base station 216 and the third base station 214. The communication module 332 may also be arranged to connect the public transport access server 300 to a controller of the cellular network. The processing module 310 comprises a clock sub-module 312, a location processing sub-module 314, a handover detection sub-module 316, a time processing sub-module 318 and a data checking sub-module 320. The various sub-modules of the processing module 310 may be defined as hardwired circuits or as programmed parts of the processing module 310. The storage module 342 may be used for storing a computer programme product for programming the processing module 332 and in particular for defining the various sub-modules of the processing module 332.

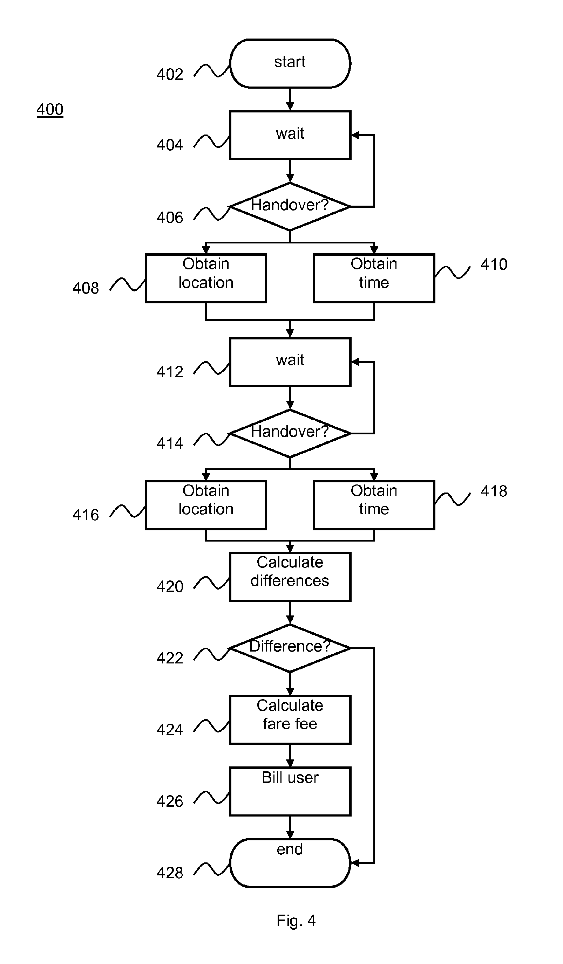

Figure 4 shows a flowchart 400 depicting a procedure that may be executed by the public transport access server 300. The procedure relates to a status of the mobile telephone 132 carried by the user who embarks the bus 100 at the first bus stop 202 and travels to the second bus stop 204 via the trajectory 200 where he or she disembarks. The procedure starts in a starting point 402. At the start of the procedure, the mobile telephone is associated with the first stationary cell 222 (Figure 2). Subsequently, the procedure enters in a waiting loop comprising a waiting step 404 and a checking step 406. In the checking step 406, it is checked whether a handover of the mobile telephone 132 from the first stationary cell 222 (Figure 2) to the bus cell 152 (Figure 1) is detected. The handover may be detected by means of the handover detection sub-module 316. The handover may be detected by receiving a notification from a control centre controlling operation of the cellular network.

If no handover is detected, the waiting state is continued. A handover may take place if a signal received by the mobile telephone 132 from the mobile base station 122 is stronger than a signal received from the first base station 212. Within the bus 100, the signal from the mobile base station 122 is preferably stronger than the signal from the first base station 212 to enable handover from the first stationary cell 222 to the bus cell 152 if the mobile telephone 132 enters the bus 100.

With a constant signal strength provided by the first base station 212 and the mobile base station 122, the signal from the mobile base station may not always be stronger than that of the first base station 212. The signal strength detector 162 is arranged for measuring a strength of a signal provided by the first base station 212. The data obtained by means of the signal strength detector 162 may subsequently be used for adjusting a strength of the signal provided by the mobile base station 122 such that within the perimeter of the bus 100, the signal provided by the mobile base station 122 is always stronger than the signal provided by the first base station 212 or another base station located outside the bus 100. The processing for this step is performed by the mobile base station 122.

The data obtained by means of the signal strength detector 162 may also be used for adjusting a strength of the signal provided by the mobile base station 122 such that outside the perimeter of the bus 100, the signal provided by the mobile base station 122 is always weaker than the signal provided by the first base station 212 or another base station located outside the bus 100. In this way, handover may take place upon the user of the mobile telephone 132 embarks or disembarks the bus 100.

In one embodiment, the handover from the first stationary cell 222 is only enabled if the mobile telephone 132 and in particular a user identity stored in the mobile telephone, for example in the SIM card, is comprised by a list of subscribed identities. The list of subscribed identities may be stored in the storage module 342 (Figure 3). The subscribed identities are identities subscribed for use of the bus 100. The subscribed identities may be identities subscribed for use of the whole transportation facility provided by an operator of the bus 100 and other vehicles. Alternatively, the subscribed identities may be identities subscribed for use by the bus 100 only. In particular in the latter case, the identities may be subscribed for a limited time and in particular for a duration of a maximum trip by the bus 100.

The subscription may be effectuated via an application provided on the mobile telephone 132. By means of such application, the user may indicate he or she intends to use the bus 100 by selecting the service provided by the bus 100 as serving a specific bus line comprising the trajectory 200. Data on the selection of the service provided by the bus 100 is sent by the mobile telephone 132 to the public transport access server 300. This data is used to add the identifier of the mobile telephone 132 to the list of identities subscribed for use of the service.

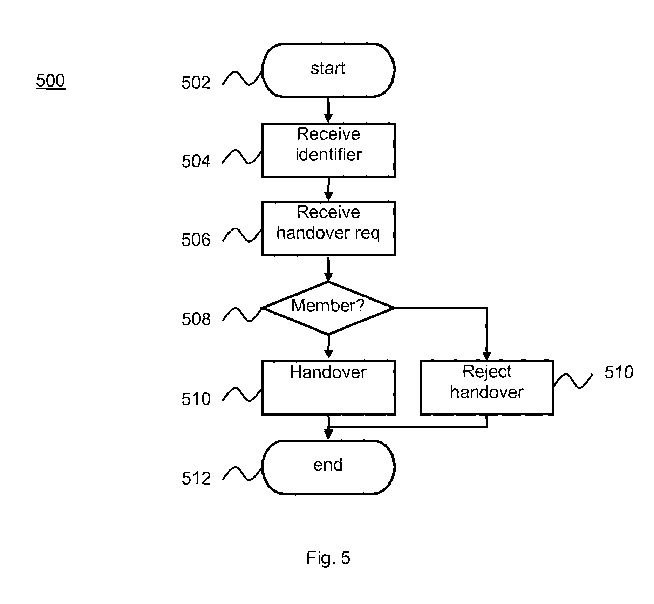

Handover in this embodiment is depicted in further detail by Figure 5 which discloses a flowchart 500 showing a procedure. The procedure starts in a starting point 502, after which an identifier of the mobile telephone 132 is received. Subsequently, a handover request for handover of the mobile telephone from the first stationary cell 222 to the bus cell 152 is received in step 506. In step 508, the public transport access server 300 checks whether the identity of the mobile telephone 132 is comprised by the list of subscribed identities. If the identity of the mobile telephone 132 is comprised by the list of subscribed identities, the mobile telephone 132 and in that way the user of the mobile telephone 132, is a member of the service provided by the bus 100 or of all or part of the services provided by the operation of the bus 100. And if the user of the mobile telephone 132 is a member, the handover from the first stationary cell 222 to the bus cell 152 is effectuated in step 510. If the user is not a member, the handover request is rejected in step 510. Subsequently, the procedure ends in terminator 512.

If the handover is detected, first event data related to the handover is obtained by means of the communication module 332 of the public transport access server 300. Such first event data is associated to the vehicle or they are event data of the vehicle and may comprise a time that the handover took place, a location of the mobile telephone 132, a location of the bus 100, a location of the first base station 212, other data, or a combination thereof. Location data is obtained in step 408 and time data is obtained in step 410. The location data may be obtained by means of the telephone GPS module 134 or by means of the bus GPS module 124. In this embodiment, the user embarks the bus 100 at the first bus stop 202. Location data obtained by may be associated with the first bus stop 202. Time data may be obtained remotely, from the mobile telephone 132 or the mobile base station 122. Time data may also be obtained locally by the public transport access server 300 and the clock sub-module 312 in particular.

Upon the handover from the first stationary cell 222 to the bus cell 152, the procedure enters a waiting loop comprising a waiting step 412 and a checking step 414. In the checking step 414 is checked whether a handover is detected. In particular, it is checked whether the mobile telephone leaves the bus cell 152. In this embodiment, the mobile telephone remains associated with the bus cell 152 while located in the bus 100 that is travelling from the first bus stop 202 to the second bus stop 204 over the trajectory 200. This means that during the trip, no handover takes place from the bus cell 152 to the third stationary cell 224.

A handover takes place as the user disembarks the bus 100 at the second bus stop 204 and leaves the perimeter of the bus 100. In particular, a handover of the mobile telephone 132 from the bus cell 152 to the second stationary cell 226 takes place as the strength of the signal received from the second base station 216 exceeds the strength of the signal received from the mobile base station 122. The handover is detected in step 414.

Subsequently, the public transport access server 300 obtains second event data on the handover of the mobile telephone 132 from the bus cell 152 to the second stationary cell 226. Such event data is associated to the vehicle or they are event data of the vehicle and may comprise a time that the handover took place, a location of the mobile telephone 132, a location of the bus 100, a location of the first base station 212, other data, or a combination thereof. Preferably, the second event data is of the same type as that of the first event data that has been obtained after or upon handover of the mobile telephone 132 from the first stationary cell 222 to the bus cell 152. In particular location data is obtained in step 416 and time data is obtained in step 418.

Subsequently, the first even data and the second event data are compared. As discussed, in this embodiment, location and time is obtained as event data. This data is in step 420 used for calculating a difference between the time in the second event data and the time in the first event data and/or a difference between the location in the second event data and the location in the first event data. Location data is processed by the location processing sub-module 314 and time data is processed by the time processing sub-module 318.

The difference or the differences are checked against a pre-determined criterion in step 422 by the data checking sub-module 320. If the difference between the time of the second event data and the time of the first event data is smaller than a pre-determined timing threshold, it may be that the mobile telephone 132 was associated with the bus cell 152 by accident. This may have happened while the user was driving alongside the bus 100 for a limited amount of time and the strength of a signal provided by the third base station 214 at a location of the user was temporarily lower than the strength of the signal provided by the mobile base station 122. In such circumstances, a handover of the mobile telephone 132 carried by the user may take place from the third stationary cell 224 to the bus cell 152. So if the difference between the time of the second event data and the time of the first event data is smaller than a pre-determined timing threshold, it is determined that the user has not used the bus 100. In that case, the procedure ends in a terminator 428.

In the same way, difference between the location of the second event data and the location of the first event data may be calculated and checked against a pre-determined location threshold. Additionally or alternatively, the location of the second event data and the location of the first event data may be checked against locations of the first bus stop 202 and the second bus stop 204. If handover of the mobile telephone 132 is detected and location data comprised by the first event data and/or the second event data does not relate to the location of the first bus stop 202 or the second bus stop, it may be likely that the user has not used the bus 100.

If the difference in time and/or location exceed a certain threshold and, more in general, if the first event data and/or the second event data meets a certain pre-determined criterion, it is determined that the user has used the transportation facility of which the bus 100 forms part. In that case, the procedure proceeds to step 424 in which a fee of a fare is calculated for use of the bus 100. Optionally, event data may be used for calculation of the fee. The fee may depend on the distance travelled by means of the bus 100 or the time spent by the bus 100 for travelling the trajectory 200 from the first bus stop 202 to the second bus stop 204. To determine this, the time spent or the length of the trajectory may be multiplied by a pre-determined amount of money. Alternatively, the price per unit decreases if time and/or length travelled is above a pre-determined money threshold. In yet another alternative, a fixed fee is calculated. The fixed fee may, in turn, depend on certain characteristics of the user, like age or a discount subscription held by the user.

Having calculated or, more in general, determined the fee of the fare, the user is billed for the amount of the fee in step 426. The user may be billed through a mobile telephone company. This is particularly advantageous if the public transport access server 300 forms part of a base station controller or another part of a cellular network. Alternatively, the user is billed through the transportation company. After billing the user, the procedure ends in terminator 428.

Having disclosed various embodiments, it is noted that the method disclosed may be embodied in different ways. Instead of GPS, also other navigation systems may be used, either satellite-based or terrestrial. Next to bus, the methods and various embodiments thereof may also be used for train, metro, tram and other facilities, either public or private.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. When data is being referred to as audiovisual data, it can represent audio only, video only or still pictures only or a combination thereof, unless specifically indicated otherwise in the description of the embodiments.

In the description above, it will be understood that when an element such as layer, region or substrate is referred to as being "on", "onto" or "connected to" another element, the element is either directly on or connected to the other element, or intervening elements may also be present.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Method (400) of determining usage of a transportation facility by a user carrying a user equipment (132), the transportation facility comprising a vehicle (100) having a vehicle base station (122) associated with the vehicle, the vehicle base station providing a vehicle cell (152) of a cellular network in the vehicle, the method comprising:
- Detecting (406) a first handover of the user equipment from a first stationary cell (154, 222, 224, 226) provided by a first stationary base station (140, 212, 214, 216) to the vehicle cell;
- Obtaining (408, 410) first event data associated to the vehicle at the first handover;
- Detecting (414) a second handover of the user equipment from the vehicle cell to a second stationary cell (154, 222, 224, 226) provided by a second stationary base station (140, 212, 214, 216);
- Obtaining (416, 418) second event data associated to the vehicle at the second handover; and
- Determining (422) that the user has used the transportation facility if the first event data and the second event data meet at least one pre-determined criterion.

2. Method according to claim 1, further comprising:
- Receiving (506), from the user equipment (132), a user equipment identifier, the user equipment identifier identifying the user equipment;
- Checking (508) the user equipment identifier against a list of subscribed identifiers, the subscribed identifiers identifying user equipments subscribed to a public transport service provided by the transportation facility;
- If the user equipment identifier is in the list of subscribed identifiers, enabling (510) handover from the first stationary cell to the vehicle cell.

3. Method according to claim 2, wherein the request for handover is received from the user equipment (132).

4. Method according to any of the claims 1 to 3, wherein the signal strength of the vehicle base station (152) is such that it covers substantially all places in the vehicle (100) that may be used by passengers.

5. Method according to any of the claims 1 to 4, comprising:
- Measuring a first stationary signal strength of a first stationary signal provided by the first stationary base station at a periphery of the vehicle; and
- Adjusting a vehicle signal strength of a vehicle signal provided by the vehicle base station such that, within the periphery of the vehicle, the vehicle signal strength is higher than the first stationary signal strength.

6. Method according to any of the claims 1 to 5, wherein:
- The first event data is a first location (202, 204);
- The second event data is a second location (202, 204); and
- The pre-determined criterion is that the difference between the first location and the second location is larger than a pre-determined location value.

7. Method according to claim 6, wherein the first location (202, 204) and the second location (202, 204) are obtained by means of a GPS sensor (134) in the user equipment.

8. Method according to claim 6 or 7, wherein obtaining the first location (202, 204) comprises receiving first location data from the user equipment, the first location data indicating the first location and obtaining the second location (202, 204) comprises receiving second location data from the user equipment, the second location data indicating the second location.

9. Method according to claim 6, wherein obtaining the first location (202, 204) and the second location (202, 204) comprises receiving first location data indicating the first location and second location data indicating the second location from a GPS sensor (124) provided in the vehicle (100).

10. Method according to claim 6, wherein obtaining the first location (202, 204) comprises determining a location of at least the first stationary base station (202, 204) and obtaining the second location (202, 204) comprises determining a location of at least the second stationary base station (202, 204).

11. Method according to any of the claims 6 to 10, wherein usage of the transportation facility by the user is only detected if at least one of the first location (202, 204) and the second location (202, 204) is within a pre-determined range of a pre-determined location (202, 204).

12. Method according to claim 11, wherein the pre-determined location (202, 204) is a pre-defined stopping place (202, 204) of the vehicle (100) for enabling passengers to embark and/or disembark the vehicle.

13. Method according to any of the claims 1 to 5, wherein:
- The first event data is a first local time;
- The second event data is a second local time; and
- The pre-determined criterion is that the difference between the first local time and the second local time is larger than a pre-determined time value.

14. Method according to any of the claims 1 to 13, further comprising receiving a message from the user equipment, the message comprising data indicating an intention of the user to use a service provided by the vehicle, wherein determining that the user has used the transportation facility comprises checking whether the message comprising data indicating the intention has been used.

15. Method according to any of the claims 1 to 14, further comprising billing (426) the user upon detecting usage of the transportation facility by the user.

16. Method according to claim 15, further comprising determining (424) a fare price based on the first event data and the second event data.

17. Device (300) for detecting usage of a transportation facility by a user carrying a user equipment(132), the transportation facility comprising a vehicle (100) having a vehicle base station (122) associated with the vehicle, the vehicle base station providing a vehicle cell (152) of a cellular network in the vehicle, the device comprising:
- A processing unit (310) arranged to:
- Detect a first handover of the user equipment from a first stationary cell (154, 222, 224, 226) provided by a first stationary base station (140, 212, 214, 216) to the vehicle cell;
- Detect a second handover of the user equipment from the vehicle cell to a second stationary cell (154, 222, 224, 226) provided by a second stationary base station(140, 212, 214, 216);
- A data communication module (332) arranged to:
- Obtain a first event data associated to the vehicle at the first handover;
- Obtain a second event data associated to the vehicle at the second handover;
The processing unit being further arranged to detect that the user has used the transportation facility if the first event data and the second event data meet at least one pre-determined criterion.

18. Device according to claim 17, adapted to perform all the steps of the method of at least one of the claims 1 to 16.

19. Computer programme product with computer executable code causing computer having read the code to perform method according to any of the claims 1-16.
